Europäisches Patentamt

European Patent Office

Office européen des brevets

(19)

(11) Numéro de publication: **0 237 431 B1**

(12) **FASCICULE DE BREVET EUROPEEN**

(45) Date de publication de fascicule du brevet: **03.03.93**

(51) Int. Cl.⁵: **C03C 21/00**, C03C 23/00, H01T 19/00

(21) Numéro de dépôt: **87400520.0**

(22) Date de dépôt: **10.03.87**

(54) **Désionisation du verre par décharge couronne.**

(30) Priorité: **11.03.86 FR 8603416**

(43) Date de publication de la demande:
**16.09.87 Bulletin 87/38**

(45) Mention de la délivrance du brevet:
**03.03.93 Bulletin 93/09**

(84) Etats contractants désignés:
**AT BE CH DE FR GB IT LI LU NL SE**

(56) Documents cités:
DE-A- 3 208 590
FR-A- 2 160 627
US-A- 3 879 183

**CHEMICAL ABSTRACTS, vol. 102, no. 4, janvier 1985, page 384, no. 30732g, Columbus, Ohio, US; & JP-A-59 169 956 (SUWA SEIKOS-HA CO. LTD) 26-09-1984**

(73) Titulaire: **SAINT-GOBAIN VITRAGE INTERNATIONAL**
**18, avenue d'Alsace**
**F-92400 Courbevoie(FR)**

(72) Inventeur: **Ettori, Solange**
**21-25, Ouai André Citroên**
**F-75015 Paris(FR)**
Inventeur: **Peraud, Jean-Claude**
**18, rue Pasteur**
**F-77380 Combs la Ville(FR)**
Inventeur: **Barton, James**
**56, rue de Boulainvilliers**
**F-75016 Paris(FR)**

(74) Mandataire: **Le Vaguerese, Sylvain Jacques et al**
**SAINT-GOBAIN RECHERCHE 39, quai Lucien Lefranc**
**F-93304 Aubervilliers Cedex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.5x/3.0.1)

**Description**

L'invention est relative aux techniques de désionisation superficielle du verre par déplacement des ions sous l'effet d'un champ électrique et, notamment, à la désalcalinisation des verres sodocalciques.

Les traitements de désalcalinisation sont entrepris de façon traditionnelle pour modifier la résistance chimique, améliorer la fixation de dépôts superficiels ou modifier certains caractères optiques du verre.

La désionisation envisagée le plus fréquemment est de type chimique. L'objet en verre est soumis à une solution ou une atmosphère réagissant aves les ions alcalins du verre. Pour faciliter la réaction, l'opération se déroule à une température supérieure à la température ambiante.

Il est apparu plus récemment des techniques dans lesquelles la désionisation superficielle est conduite par migration d'ions sous l'effet d'un champ électrique.

Dans son principe, le phénomène est le suivant : le verre dont la température est contrôlée est disposé entre deux électrodes. L'application du champ électrique mobilise les ions les plus facilement déplaçables et, en particulier, les ions alcalins. Sous l'effet d'un champ continu, les ions alcalins sont déplacés vers la cathode et forment à la surface du verre et au contact avec l'atmosphère une pellicule de carbonate. Sur la face exposée à l'anode, l'oxygène et/ou l'hydrogène diffuse (nt).

Une difficulté importante au plan pratique est d'obtenir un traitement homogène de la surface du verre. L'application du champ par des électrodes solides conduit à la formation de taches locales. Pour obtenir un traitement uniforme, il a été envisagé de soumettre le verre à des "électrodes gazeuses", de préférence en atmosphère raréfiée et avec des tensions appliquées relativement élevées, de l'ordre de plusieurs milliers de volts.

Cette façon de procéder est particulièrement délicate. En sieurs milliers de volts. A ce type de traitement correspond, par exemple, la technique décrite dans le brevet US 3 879 183, et dans laquelle des échantillons de quelques centimètres carrés sont désalcalinisés.

Cette façon de procéder est particulièrement délicate. En raison de la tension élevée, les risques de formation d'arcs sont importants. Aussi, cette technique n'a t'elle été envisagée que de façon discrète sur des spécimens de faible dimension et dans des conditions qui permettent une parfaite maîtrise des positions respectives du verre et des électrodes, de même que de l'atmosphère dans laquelle on opère. Encore, selon cette technique, il apparaît que les températures auxquelles l'opération était proposée restaient relativement faibles.

L'invention a pour but de fournir des moyens permettant d'éviter les inconvénients précédents et, en particulier, de réaliser des traitements homogènes de désionisation de feuilles de verre en les soumettant à une décharge couronne balayant la surface à traiter et ne imposant des conditions d'intensité telles que la formation d'arcs soit exclue.

Le choix d'un balayage de la feuille de verre par des électrodes ou, à l'inverse, d'une feuille mobile défilant sous une électrode permet, par un réglage approprié du mouvement, de définir une position et, par suite, un traitement identiques en tous les points de la surface contrairement à ce que l'on obtient en plaçant l'objet à traiter sous une ou plusieurs électrodes fixes, même si ces dernières forment un réseau serré.

Par ailleurs et contrairement à ce qui était effectué antérieurement, les inventeurs ont choisi de contrôler l'intensité du courant circulant entre les électrodes. Cette régulation permet de faire face à toute irrégularité dans le positionnement relatif de la feuille de verre et des électrodes ou encore dans les variations de conductibilité. Dans ce type de régulation, la tension s'ajuste pour faire en sorte qu'à tout instant l'intensité soit toujours la même. Si, par ailleurs l'électrode présente la même configuration sur toute la largeur traitée, on comprend que la décharge se répartisse uniformément.

Pour accroître la stabilité de la décharge, celle-ci est engendrée de préférence dans une atmosphère contrôlée connue pour favoriser la formation des plasmas. On utilise avantageusement une atmosphère gazeuse contenant de l'argon.

Tout le traitement est commandé par la diffusion des ions dans le verre traité. La vitesse de diffusion est elle-même très sensible à la température à laquelle on opère.

Les inventeurs ont montré que la température de traitement intervient non seulement sur la cinétique de la diffusion, mais aussi sur la nature des ions touchés par cette diffusion. Nous verrons dans les exemples le comportement des principaux éléments concernés. De façon générale, il apparait que pour les températures relativement basses, seuls les ions alcalins migrent sous l'effet du plasma. Pour des températures élevées, il est possible de faire migrer à la fois les ions alcalins et les ions alcalino-terreux.

Dans les verres sodo-calciques usuellement choisis pour les productions les plus abondantes, notamment pour les produits "verre plat", on constate pour les températures supérieures à environ 400°C une migration très poussée des alcalins. La couche superficielle traitée est pratiquement dépourvue de sodium (qui est de très loin l'alcalin dont la teneur initiale est la plus forte ; elle peut atteindre ou même dépasser 15%). De la même façon au-dessus de 400°C, les ions alcalino-terreux en particulier le calcium et le magnésium sont éliminés de la couche superficielle.

Il est possible également d'obtenir une migration superficielle sous l'effet d'une décharge couronne à des températures moins élevées. En particulier, la désionisation peut être conduite à des températures de l'ordre de 100 à 250°C en maintenant un résultat très homogène sur toute la surface traitée. Par opposition avec les opérations à "haute température", on constate que pratiquement seuls les ions alcalins migrent. Cette observation vaut pour des désalcalinisations de même ampleur, autrement dit touchant des couches superficielles de même profondeur. Si, dans le cas des basses températures définies ci-dessus, le traitement est prolongé suffisamment, on peut observer également une élimination des ions alcalino-terreux mais sur une très faible profondeur par rapport à celle qui concerne les ions alcalins. Cette migration des alcalino-terreux est si faible à basse température que pour une désalcalinisation sur les profondeurs les plus usuellement pratiquées et qui se situent à environ 0,1 à 0,2 micromètres, elle n'est pratiquement pas décelable. Dans tous les cas, elle ne permet pas d'atteindre les propriétés particulièrement avantageuses dont il sera question plus loin.

Le traitement effectué dans des conditions situées entre les températures dites "élevées" et celles dites "faibles", conduit expérimentalement à des difficultés liées à l'homogénéité. Les feuilles traitées présentent par endroits l'élimination des alcalins et des alcalino-terreux et, à d'autres endroits, l'élimination des alcalins seuls. Les raisons des défauts d'homogénéité observés ne sont pas connues. Quoiqu'il en soit, pour éviter ces difficultés il est préférable de se situer à une température suffisamment distincte de ces conditions dans lesquelles le traitement apparait inhomogène.

Dans les traitements selon l'invention, on opère avantageusement aux températures permettant simultanément l'élimination des ions alcalins et des ions alcalino-terreux.

Il est apparu aux inventeurs que ce type de traitement conduit à des produits dont les propriétés sont particulièrement intéressantes. Le traitement en question permet notamment d'obtenir une couche superficielle dont les caractéristiques sont peu ou pas altérées par les traitements ultérieurs auxquels le verre peut être soumis. Ainsi le recuit du verre dans les conditions habituelles de température et de durée de traitement ne compromet pas l'existence d'une couche superficielle désalcalinisée. Nous verrons également dans les exemples que les produits obtenus offrent une très bonne inertie chimique et des propriétés optiques remarquables.

Si, comme nous venons de l'indiquer, il est préférable selon l'invention de traiter le verre à une température suffisamment haute pour éliminer simultanément alcalins et alcalino-terreux, cette température ne peut dépasser celle pour laquelle on atteint le ramollissement du verre. Pour les verres sodo-calciques usuels, le ramollissement peut se produire dès environ 800°C. Pour cette raison, on opère de préférence à une température inférieure à 750°C et, le plus souvent, à une température qui ne dépasse pas 700°C.

Un autre facteur important pour la migration des ions est l'intensité imposée. Si a priori, il semble avantageux d'avoir une intensité élevée pour accélérer le traitement, le risque de formation d'arcs devient vite très important. L'intensité à laquelle on peut opérer sans risque, dépend aussi de la température, de la vitesse de balayage et de l'épaisseur du verre. La décharge est d'autant plus régulière que la température est plus élevée. De façon simplifiée, on peut aussi admettre que plus le verre traité est épais, plus grande est la stabilité de la décharge. En pratique cependant, lépaisseur des feuilles traitées ne varie que dans des limites relativement étroites si bien que ce facteur ne joue qu'un rôle secondaire. Il est remarquable par contre que le traitement par balayage effectué selon l'invention, loin de perturber la formation du plasma, contribue à la stabilité de celui-ci ou au moins facilite la prévention des arcs. De même, la régularité dépend des conditions géométriques : configuration de l'électrode et distance entre les électrodes.

Pour des électrodes linéaires présentant une bonne localisation de la décharge couronne par un "effet de pointe" et pour les températures indiquées précédemment, l'intensité ne dépasse pas ordinairement 400 mA par cm linéaire d'électrode. De préférence, cette intensité est de l'ordre de 50 à 100 mA par cm linéaire d'électrode. Ces valeurs correspondent à un traitement pour une vitesse moyenne de l'ordre de 2m/min. Comme nous l'avons indiqué, elles peuvent être sensiblement plus élevées si la vitesse de balayage est accrûe.

Inversement, une intensité très faible n'est pas souhaitable. En plus du fait que le traitement est lent, une intensité très faible ne permet pas d'obtenir une décharge homogène. En pratique, l'intensité n'est pas inférieure à 10 mA/cm et de préférence est supérieure à 20 mA/cm pour les températures de traitement supérieures à 400°C. Pour des températures plus faibles et notamment celles pour lesquelles, en pratique, on ne déplace que les ions alcalins, l'intensité peut être bien moindre et descendre jusqu'à des valeurs de l'ordre de 1 mA/cm.

Dans tous les cas il convient, comme indiqué précédemment, d'opérer avec une intensité stabilisée qui est le seul moyen pour obtenir un traitement homogène en particulier lorsque, comme selon l'invention, on effectue un "balayage" de la feuille et que les conditions instantanées notamment de température ou d'état de surface du verre, ou de nature du gaz dans la zone de la décharge, sont susceptibles de varialtions limitées mais néanmoins sensibles pour le résultat du traitement.

La distance séparant les électrodes ou plus précisément, la partie de cette distance qui n'est pas occupée par le verre et dans laquelle se développe la décharge couronne, est aussi unfacteur sensible de la régularité du traitement. L'établissement de la décharge est d'autant plus facile que la distance en question est plus petite. Il faut une tension d'amorçage plus faible et les risques de formation d'arcs sont alors aussi limités. La difficulté est de maintenir une faible distance dans un traitement en continu et, par exemple, sur des feuilles de verre qui peuvent avoir plus d'un mètre de largeur. Il faut, quel que soit l'état de la feuille, éviter absolument le contact avec l'une des électrodes ce qui se traduirait par une tache au point de contact. Si, à l'inverse, on accroît la distance entre électrodes, la tension imposée doit être accrûe de façon importante et le risque d'apparition d'arcs reparait.

Il s'agit donc de trouver un compromis entre ces deux exigences contradictoires. En pratique, il est difficile de maintenir une distance inférieure à 1 mm avec suffisamment de sécurité, il est aussi préférable de ne pas dépasser une distance de l'ordre de 8 mm.

Si pour des raisons de contraintes technologiques, une distance plus grande doit être envisagée, il est possible néanmoins de réduire le risque de formaltion d'arcs. Pour cela, il est avantageux de procéder au traitement dans une enceinte en dépression par rapport à l'atmosphère environnante. La raréfaction des gaz, sans modifier sensiblement la formation de la décharge couronne, repousse la tension d'apparition des arcs.

Dans le mode le plus simple, la tension appliquée aux électrodes est continue tout au long due traitement. Pour faciliter l'amorçage de la décharge, en particulier au début d'une nouvelle opération ou après toute interruption, il peut être avantageux soit d'accroître momentanément la tension, soit encore de combiner une tension continue à une tension alternative. Cette dernière, qui se superpose à la tension continue, permet une activation générale des ions du verre que ceux-ci soient sur la face exposée à l'anode ou celle exposée à la cathode. Le cas échéant une telle superposition peut être maintenue pendant tout le traitement.

Pour faciliter l'amorçage de la décharge couronne, il peut être avantageux également d'établir au voisinage des électrodes une atmosphère différente de celle correspondant au régime de traitement. Les inventeurs ont ainsi montré que l'utilisation d'hélium permet d'abaisser très sensiblement la tension d'amorçage par rapport à celle que l'on observe par exemple en atmosphère d'argon. Ce gaz pourrait, le cas échéant, être utilisé tout au long du traitement. On préfère cependant limiter sa présence à l'amorçage de la décharge en raison de son coût et aussi du fait qu'il correspond à une puissance consommée supérieure à celle que l'on observe avec l'argon.

Un avantage important lié à la facilité d'amorçage de la décharge, est de permettre le cas échéant l'éloignement des électrodes. En effet une des raisons qui conduit à rapprocher les électrodes de la surface traitée, en dépit des difficultés que l'on peut avoir à maintenir en permanence des distances très faibles entre le verre et les électrodes, est la nécessité de devoir amorcer la décharge sans trop accroitre la tension et, par suite, les risques de formation d'arcs. Dans la mesure où l'utilisation du gaz d'amorçage permet d'abaisser la tension, il devient possible d'éloigner les électrodes et donc de réduire les risques de contacts accidentels des électrodes et du verre.

Le temps de traitement du verre dépend à la fois de l'intensité imposée et de l'étendue du traitement recherchée.

Plus l'intensité est élevée, plus la désionisation est rapide. S'agissant d'un traitement qui s'effectue par balayage de la feuille, on peut donc pour une forte intensité accroître la vitesse de balayage.

Une application de l'invention consiste à disposer l'étape de désionisation superficielle directement sur une ligne continue de production de verre plat. Il convient dans ce cas de faire en sorte que le traitement du verre soit suffisant lorsque celui-ci défile à la vitesse de production imposée par la ligne. Le cas échéant, lorsque la vitesse de production est très élevée et que le traitement que l'on peut obtenir au maximum de l'intensité se révèle insuffisant, plusieurs électrodes successives peuvent être disposées sur le trajet du verre pour atteindre le résultat recherché.

L'utilisation de plusieurs électrodes permet, en outre, le cas échéant, d'uniformiser encore le traitement obtenu.

Si en principe, la désionisation peut s'effectuer sur une profondeur variable, au fur et à mesure de la désionisation le verre devient de moins en moins conducteur et le traitement des couches plus profondes réclame l'application de tensions de plus en plus fortes. Par ailleurs, dans les applications usuelles, un traitement sur une profondeur extrêmement faible est le plus souvent suffisant pour obtenir les propriétés adéquates, l'important étant plus d'avoir un traitement parfaitement uniforme. Ainsi, pour les utilisations envisagées qui seront indiquées plus loin, une désionisation sur des couches aussi minces que le dizième de micromètre convient bien. En pratique, l'épaisseur traitée ne dépasse pas le micromètre et le plus fréquemment est inférieure à 0,5 micromètre.

L'invention est décrite de façon plus détaillée dans ce qui suit, en faisant référence aux planches de dessins dans lesquelles :

- la figure 1 est un schéma de principe montrant la disposition des différents éléments intervenant pour l'établissement d'une décharge couronne,
- la figure 2 montre, en coupe, les éléments de la figure 1 tels qu'utilisés pour les essais selon l'invention,
- la figure 3 est un schéma, en coupe, montrant une façon de mise en place de la désionisation, selon l'invention, sur une ligne de production de verre plat en continu,
- la figure 4a est un graphique de mesure de la teneur en différents éléments dans la couche superficielle pour un traitement à faible température,
- la figure 4b est un graphique, analogue à celui de la figure 4a, pour le même verre non traité,
- la figure 4c est analogue à la figure 4a et correspond à un traitement prolongé à basse température,
- la figure 5a est un graphique, analogue aux précédents, pour un traitement "haute température",
- la figure 5b présente le même résultat que celui de la figure 5a, mais en échelle non logarithmique,
- la figure 6 montre l'évolution des résultats du traitement selon l'invention, suivant que l'échantillon n'est pas ou est soumis à un recuit,
- la figure 7 est une schéme montrant une autre disposition des éléments mis en oeuvre du type de celui de la figure 2,
- la figure 8 est un schéma analogue au précédent correspondant à une traitement simultané sur les deux faces.

Pour obtenir un plasma, on place la feuille de verre 1 entre deux électrodes 2 et 3 soumises à une tension élevée. En principe, pour faciliter l'apparition du plasma, une des deux électrodes présente une arête, tandis que celle qui lui fait face s'étend sur une certaine surface. En fait, lorsque la feuille de verre est disposée entre deux électrodes sans contact avec celles-ci, ses faces jouent un rôle comparable à celui de l'électrode plane. Dans ces conditions, on peut utiliser deux électrodes présentant un effet de pointe. Dans tous les cas, la décharge couronne se produit de part et d'autre de la feuille 1.

Pour le traitement de feuilles de verre, les essais effectués par les inventeurs en faisant reposer ces feuilles directement sur la cathode, n'ont pas donné de résultats satisfaisants.

Sur la face au contact de la cathode, il apparait des taches qui correspondent aux points de contact effectifs de la feuille et de la cathode. Même pour des feuilles bien planes, un contact parfait est pratiquement irréalisable avec une électrode rigide. Ceci est vrai pour les essais effectués de façon statique et cela l'est encore bien davantage en régime dynamique, c'est-à-dire lorsque la feuille et l'électrode sont animées d'un mouvement relatif. Pour ces raisons, dans la mise en oeuvre de l'invention, sous réserve des mises en oeuvre particulières dont il est question plus loin, la feuille de verre passe entre les électrodes sans être au contact d'aucune. Cette façon de procéder permet de s'affranchir des irrégularités de faible ampleur qui peuvent apparaitre dans la forme soit de la feuille soit des électrodes, et est particulièrement bien adaptée pour s'intégrer sur une ligne de production où ce type d'irrégularité apparait inévitablement.

Il demeure que le réglage de la position des électrodes vis-à-vis de la feuille doit être opéré avec une bonne précision. En effet, les distances séparant les électrodes de la feuille, qui sont un des facteurs importants du bon déroulement du traitement, sont relaltivement faibles et les écarts possibles par rapport à la position normale sont très étroits si l'on veut éviter des contacts accidentels qui conduiraient à la formation de taches à la surface du verre. Si les feuilles présentent de grandes irrégularités, telles que des ondulations d'amplitude supérieure aux écarts que permettent les distances entre les électrodes, il est possible de remédier à ces difficultés en asservissant la position des électrodes aux faces de la feuille de verre.

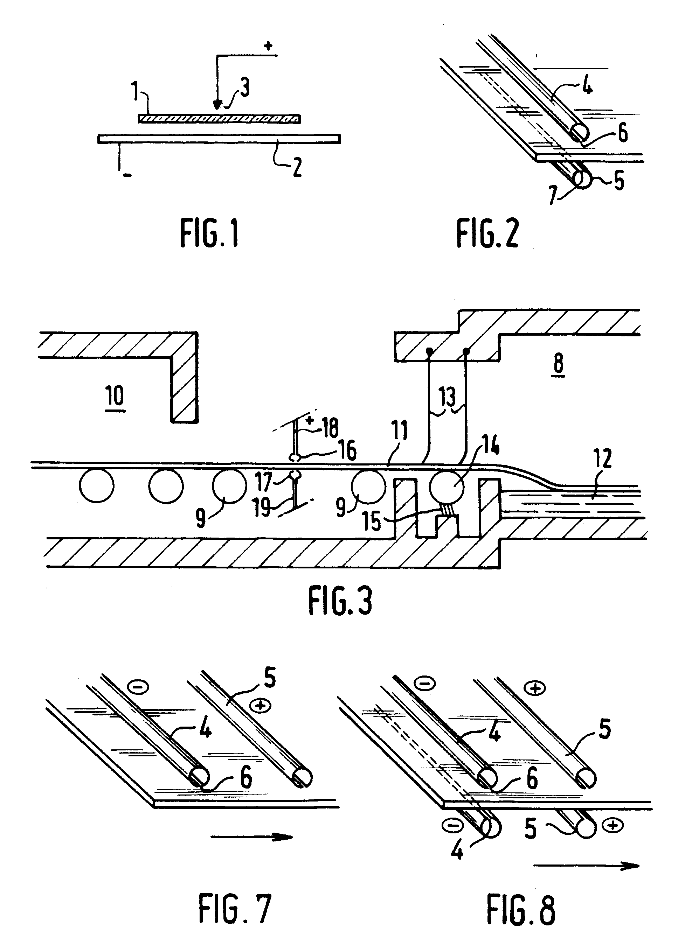

Dans le schéma de la figure 1, on a représenté l'anode à la partie supérieure. C'est, par conséquent, la face supérieure de la feuille qui fait l'objet d'une désionisation.

Une série d'expériences est conduite sur un montage tel que représenté à la figure 2. La particularité des électrodes dans ce cas est de servir de conduits pour le gaz plasmagène. Dans les essais rapportés, ce gaz est de l'argon.

Les deux électrodes 4 et 5 sont en forme de tubes cylindriques creux. A l'intérieur de ces tubes, sont disposés des moyens non représentés formant chicane et permettant d'assurer une distribution uniforme du gaz sur toute la longeur de l'électrode à partir du raccordement avec la source de gaz.

Les tubes présentent une fente 6, 7 selon une génératrice du cylindre. Cette fente étroite permet l'écoulement de l'argon. Chaque lèvre de la fente constitue une arête disposée en face de l'électrode opposée.

En raison de la proximité de la feuille de verre 1, chaque électrode émet un courant gazeux qui commande la nature du gaz dans la zone de la décharge couronne. Même lorsque l'émission est relativement faible, on assure un contrôle dynamique de l'atmosphère. Pour l'essentiel, celle-ci est donc composée du gaz émis à partir des électrodes. A ce gaz peut se mélanger, pour partie, celui constituant l'atmosphère environnante ; dans la majorité des cas, il s'agira d'air.

Eventuellement, le contrôle de l'atmosphère peut ne pas être localisé uniquement au voisinage des électrodes. Il est possible, suivant des techniques traditionnelles pour le traitement des feuilles de verre, d'opérer dans une enceinte fermée remplie du mélange gazeux choisi. Un balayage dynamique permet aussi, dans ce cas, de maintenir rigoureusement constant la composition de l'atmosphère de travail.

Toujours dans le cas d'un traitement dans une enceinte à atmosphère contrôlée, il est possible également d'opérer sous une pression réduite. Ce type de traitement, réclamant un vide partiel plus ou moins poussé, est bien entendu réalisable de façon discontinue mais est également utilisé de façon courante sur des lignes de production en continu, notamment pour le dépôt de couches minces.

Les solutions techniques décrites part ailleurs pour la réalisation de ces basses pressions, sont transposables au traitement selon l'invention.

Il va de soi que dans le cas où le traitement s'effectue dans une enceinte dont l'atmosphère est contrôlée, les électrodes peuvent n'avoir pour fonction que celle de conducteurs électriques. Mais, même en l'absence de ces enceintes, la distribution de gaz plasmagène au voisinage immédiat de la zone dans laquelle se développe la décharge couronne peut être assurée par d'autres moyens que l'électrode elle-même. L'avantage de l'utilisation de l'électrode pour amener le gaz plasmagène est, qu'en distribuant ce gaz au point précis où celui-ci est mis en oeuvre, il est possible de limiter dans les meilleures conditions la consommation de ce gaz. On peut encore remarquer que la consommation est d'autant plus faible que l'espace dans lequel la décharge couronne se produit est lui-même plus restreint, ce qui constitue une raison supplémentaire de s'efforcer de rapprocher les électrodes de la feuille.

Dans la configuration représentée à la figure 7, les deux électrodes sont situées du même côté de la feuille de verre. Les inventeurs ont en effet constaté de façon surprenante que cette disposition permettait également la désalcalinisation de la face exposée aux électrodes dans des conditions analogues à celles que l'on observe lorsque les deux électrodes sont situées de part et d'autre. Comme précédemment les deux électrodes sont situées à faible distance de la feuille de verre et un courant gazeux plasmagène est entretenu entre l'électrode et la feuille.

On constate que la formation de plasma peut être obtenue pour des électrodes relativement éloignées l'une de l'autre. On peut ainsi atteindre ou dépasser 100 mm entre anode et cathode. Cette distance est de préférence limitée à celle qui garantit l'absence d'arcs. Ordinairement, pour les températures considérées et aux tensions appliquées pour la formaltion du plasma et pour un défilement de l'ordre du mètre par minute, une distance de 20 à 60 mm est satisfaisante. Cette distance peut être réduite mais dans ce cas, il est ordinairement nécessaire de disposer un écran non conducteur entre les électrodes au niveau où les arcs seraient susceptibles de se former c'est-à-dire à proximité immédiate de la feuille. Il faut souligner que la distance accrue entre les électrodes n'entraine pas de modifications sensibles des tensions qu'il est nécessaire d'appliquer pour obtenir le plasma.

Dans la configuration visée par la figure 7, il est préférable de disposer la cathode en amont de l'anode par rapport au sens de défilement de la feuille.

La présence des deux électrodes sur le même côté de la feuille présente l'avantage de ne pas modifier la nature de la deuxième face. En particulier, si l'on respecte l'ordre des électrodes défini précédemment, il ne se forme pas de dépôt carbonaté à la surface du verre. Autrement dit, il n'est pas nécessaire de "laver" le verre après traitement pour éliminer le sodium comme nous le verrons dans la suite.

L'absence de migration des ions d'une face à l'autre que l'on obtient en disposant les deux électrodes du même côté de la feuille offre encore des facilités accrues pour le traitement des deux faces de la feuille. Ceci peut être obtenu au moyen d'un ensemble tel que représenté à la figure 8. Il s'agit dans ce montage de disposer sur chaque face de la feuille un couple anode-cathode, les deux anodes et les deux cathodes étant disposées de façon symétrique de sorte que les échanges ne puissent s'effectuer qu'entre électrodes situées du même côté de la feuille. Pour celà, il convient bien entendu que les paramètres géométriques et électriques soient les mêmes pour chaque couple d'électrodes.

Le traitement du verre devant s'effectuer à température élevée, l'installation pour la mise enoeuvre de l'invention doit comprendre également des moyens permettant de chauffer le verre. Il est possible d'effectuer ce chauffage par des moyens disposés sur la ligne de production uniquement à cet effet. Mais, il est préférable de localiser le traitement à un endroit où le verre se trouve déjà à la température adéquate. La figure 3 représente ainsi la partie d'une ligne de production dans laquelle les électrodes de désionisation, du type décrit précédemment pour la figure 2, sont disposées à la sortie d'un four float 8 dans lequel défile le ruban de verre 11.

La feuille reprise sur le bain métallique est évacuée à l'extrémité du float 8. La sortie du float est conçue de façon à assurer une étanchéité dynamique vis-à-vis de l'atmosphère environnante. Sur la figure, les moyens d'étanchéité sont schématisés par les rideaux en matériau réfractaire tel que l'amiante. A la partie inférieure, le rouleau 14 et les joints 15 complètent ces moyens.

Le ruban de verre 11, à la sortie du float 8 ou à proximité immédiate de celle-ci, se trouve à une température de l'ordre de 600 à 700°C. Il se trouve donc dans les conditions satisfaisantes pour opérer le traitement selon l'invention sans qu'un réchauffement soit nécessaire.

Sur la figure 3, deux électrodes creuses 16 et 17 du type de celles de la figure 2 sont représentées avec les conduits 18, 19 d'amenée du gaz plasmagène. Un seul couple d'électrodes est représenté, mais il va de soi que l'on peut disposer plusieurs couples d'électrodes en série.

Les électrodes peuvent aussi être enfermées dans une enceinte remplie du gaz plasmagène. Dans ce cas, il est possible de prévoir des moyens d'étanchéité du type de ceux mis en oeuvre à l'extrémité du float.

Le ruban 11 porté par les rouleaux support 9 passe ensuite dans une étenderie 10 dans laquelle le recuit est effectué.

Les essais conduits par les inventeurs, en faisant varier les vitesses de défilement des verres traités, ont montré que la nature du résultat obtenu n'était pas modifiée. Lorsque la vitesse de défilement est accrûe, les autres conditions restant identiques, on modifie l'étendue du traitement. En d'autres termes, l'accroissement de la vitesse équivaut à reduire le temps de traitement. Si celui-ci devient trop court et qu'il n'est pas possible de modifier la vitesse, parce que celle-ci est déterminée par les conditions de production par exemple, il convient alors soit d'accroître le régime du traitement c'est-à-dire l'intensité, soit, lorsque ceci n'est plus possible ou souhaitable - nous avons dit pour quelles raisons l'intensité ne peut varier que dans des limites relativement étroites - de disposer plusieurs électrodes successives sur le trajet de la feuille. Dans les essais, cette situation a été simulée par des passages multiples de l'échantillon entre une paire d'électrodes.

Par ces moyens, il est possible de s'accommoder des vitesses de production les plus grandes - elles vont jusqu'à 25 m/min sur certaines lignes de verre flotté - tout en obtenant un traitement suffisamment intense.

Les essais rapportés ci-dessous sont conduits avec des électrodes cylindriques creuses de 6 mm de diamètre extérieur. La fente longitudinale est de 0,1 mm d'ouverture. Les essais ont été faits pour différentes largeurs d'électrodes sans que les résultats aient été modifiés, en dehors des difficultés liées à un ajustement des positions relatives des électrodes et de la feuille de verre. Dans le cas présent la distance séparant les électrodes de la face de la feuille de verre est réglée, dans chaque cas, à environ 1 mm.

Deux types d'échantillons sont étudiés.

Le premier correspond à du verre flotté de 2,9 mm d'épaisseur dont la composition fait apparaitre les teneurs en oxydes alcalins et alcalino-terreux suivantes :

$Na_2O$ : 13,45% ; $K_2O$ : 0,24% ; CaO : 9%; MgO: 4%.

Le second type de verre, obtenu par coulée, est et de qualité dite "extra blanc". Son épaisseur est d'environ 4 mm et sa composition est analogue à la précédente. Il se distingue par une absence pratiquement complète d'oxyde de fer. Les résultats dans ce second cas sont tout à fait semblables à ceux obtenus avec le premier verre et, ceci, bien que l'état de surface du verre coulé ne soit pas identique à celui du verre flotté.

Une première série d'essais permet d'analyser le comportement des échantillons selon le domaine de température du traitement.

Dans ces essais, en plus de la température, il faut signaler la modification simultanée de l'intensité imposée. Ceci est rendu nécessaire par le fait que la conduction du verre variant de façon très sensible avec la température il convient, pour éviter la formation d'arcs, de réduire l'intensité maximum avec la temérature. Nous avons indiqué que les variations d'intensité n'avaient pour le traitement considéré qu'une influence sur la profondeur de la désionisation. On peut, par ailleurs, compenser ces différences de traitement, soit par une vitesse de passage de l'échantillon plus ou moins grande, soit, ce qui est équivalent, par une multiplicité de passages.

Les couches traitées étant de très faibles épaisseurs, leur analyse a été faite notamment par l'analyse du spectre de masse des ions détachés de l'échantillon par bombardement ionique (technique désignée par le sigle SIMS). Cette méthode permet une analyse quantitative en fonction de la profondeur.

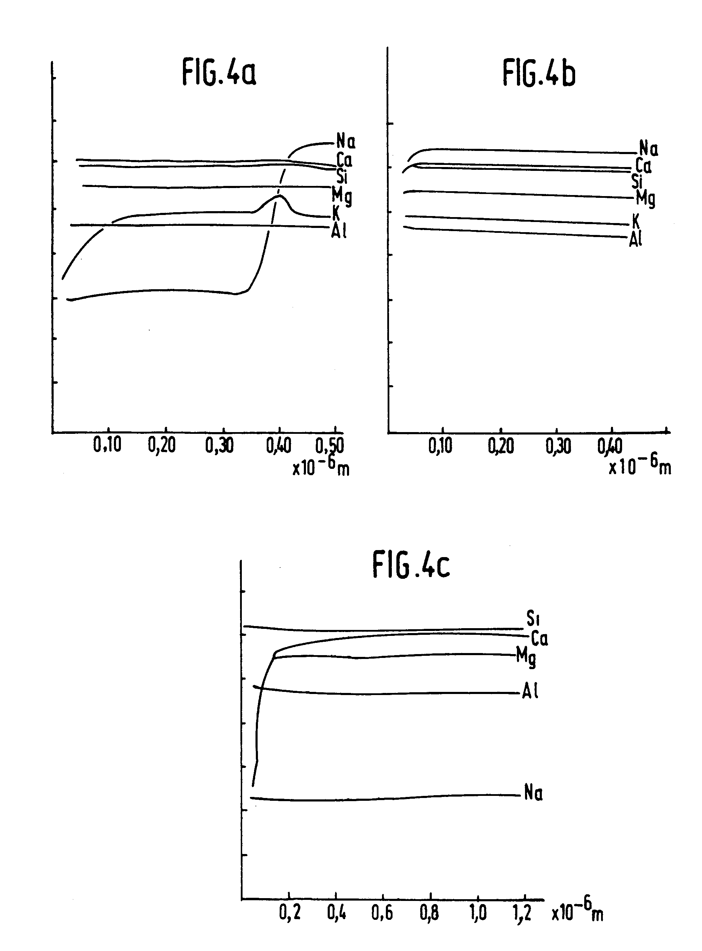

Les résultats des essais effectués à basse température (180°C) sont illustrés aux figures 4a, b, c. Dans ces essais, les intensités sont très faibles, de l'ordre de 1 mA/cm.

De façon plus précise pour l'essai dont le résultat est reproduit à la figure 4a, l'intensité est de 1,7 mA/cm et la tension s'établit en moyenne à environ 7000 V ; pour celui de la figure 4c, l'intensité est de 1,16 mA/cm pour une tension d'environ 8000 V.

Les courbes reportées aux figures en question font apparaitre les variations relatives de différents constituants en fonction de la profondeur. Ces valeurs quantitatives (sans lien les unes avec les autres) sont indiquées en échelle logarithmique.

La figure 4a est typique du résultat que l'on obtient à faible température. On constate par rapport aux courbes tracées sur l'échantillon témoin 4b une très forte diminution de la teneur en sodium à proximité immédiate de la surface et, dans l'exemple considéré, jusqu'à une profondeur de l'ordre de 0,4 micromètre, un comportement analogue du potassium mais avec des variations moins sensibles du fait de la faible teneur initiale de ce composé, et pratiquement pas de modification des teneurs des alcalino-terreux, même à proximité immédiate de la surface.

La courbe 4c présente un résultat analogue pour un traitement prolongé de l'échantillon. Le comportement est sensiblement le même que précédemment mais le front de désionisation du sodium est repoussé au-delà des limites analysées (1,20 micromètre), montrant ainsi la capacité de cette technique à des traitements plus ou moins profonds.

Sur cette courbe, on constate aussi une élimination du calcium et du magnésium mais sur une profondeur extrêmement faible, en comparaison de celle du sodium. Cette modification est sans rapport avec celle que l'on obtient à température élevée, comme nous le verrons ci-dessous.

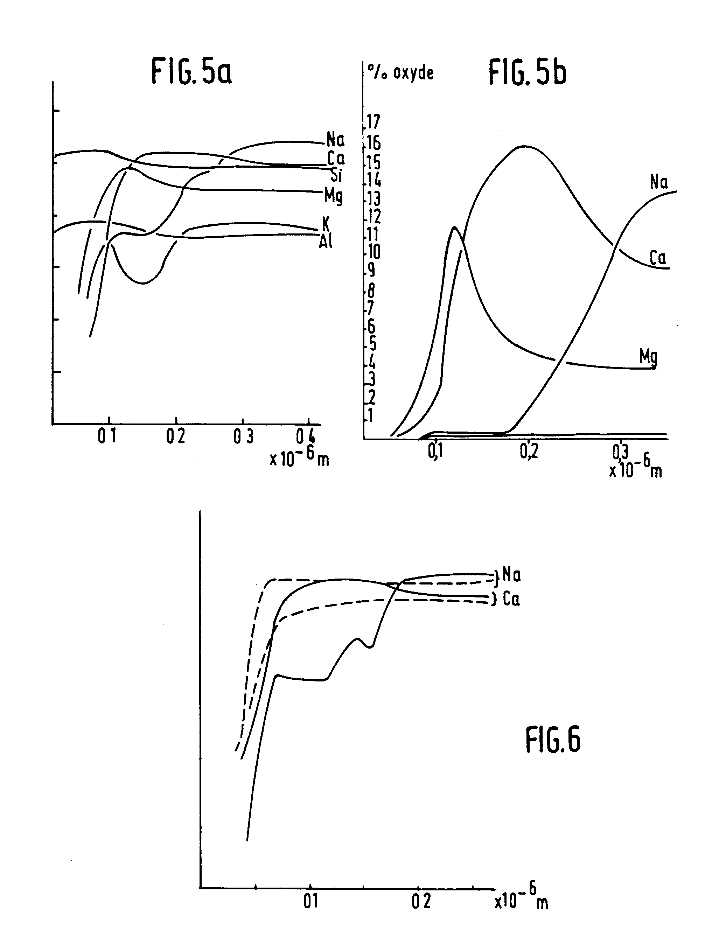

Les courbes des figures 5a et 5b correspondent à des traitements à "haute température" (580°C) à des intensités sensiblement plus importantes de l'ordre de 50 mA/cm, une tension de 500 V environ et une vitesse de défilement de 1,3 m/min. La courbe 5a, sur laquelle les teneurs sont exprimées selon une échelle logarithmique, fait ressortir des caractéristiques propres du traitement à haute température.

Les ions alcalino-terreux sont éliminés d'une couche superficielle de profondeur significative, de l'ordre de 0,1 micromètre. Contrairement à ce qui était observé dans l'exemple correspondant à la figure 4c, il faut souligner le fait que le traitement dans ce cas n'est pas très poussé. C'est ce que montrent les positions relatives des "fronts" correspondant, d'une part au magnésium et au calcium, et d'autre part au sodium et au potassium. En d'autres termes, on obtient une élimination significative des alcalino-terreux sans poursuivre le traitement dans des limites extrêmes. Autrement dit encore, en opérant aux températures les plus élevées indiquées précédemment, la vitesse de migration des ions alcalino-terreux devient très appréciable. On peut ainsi estimer le rapport de la vitesse de migration du calcium à celle du sodium à environ 0,45. Le même rapport à 180°C pour l'exemple de la figure 4c est très inférieur à 0,1.

Dans les conditions indiquées ci-dessus, on obtient un résultat homogène, qu'il s'agisse de l'un ou l'autre de ces deux régimes haute et basse température. Les limites dans lesquelles il est préférable de se tenir pour avoir un traitement homogène dans ces conditions, peuvent approximativement être fixées aux températures inférieures à 250°C d'une part et, d'autre part supérieures à 400°C et, de préférence supérieures à 450°C avec une zone particulièrement favorable au-dessus d'environ 500°C.

Pour faciliter la compréhension des courbes de la figure 5a, la figure 5b retrace les mêmes résultats en faisant apparaitre en ordonnée les teneurs des différents oxydes suivant une échelle linéaire. Cette figure montre mieux que les précédentes l'absence complète d'alcalins et d'alcalino-terreux dans la partie la plus voisine de la surface. Dans cette partie, la composition correspond pratiquement à de la silice pure. Les "pics" ou bosses de calcium et magnésium, qui se situent immédiatement après le front de ces éléments, sont également typiques de ces traitements.

Le traitement selon l'invention est encore remarquable par sa régularité. On constate en effet, toujours par l'analyse SIMS, que les fronts, notamment celui du sodium, se situent à une profondeur très homogène sur toute l'étendue de la surface traitée.

On constate également la très grande stabilité de la désionisation effectuée selon l'invention. Il n'y a pas de nouvelle migration des ions des couches profondes du verre en direction de la couche superficielle. Cette stabilité se maintient bien, même lorsque la température de l'échantillon est relativement élevée. On a vérifié notamment que, dans les conditions correspondant au recuit des feuilles de verre, ou même pour des conditions beaucoup plus sévères, on conservait une couche désalcalinisée.

La figure 6 montre à titre indicatif l'évolution, sur un même échantillon, du profil de concentration SIMS pour le sodium et le calcium après traitement selon l'invention (courbes continues, traitement à 515°C, intensité 50 mA/cm), puis après un recuit à 600°C pendant 15 minutes (courbes en traits discontinus). La température du recuit est plus élevée que celles ordinairement mises en oeuvre dans les procédés industriels. En dépit de ces conditions "défavorables", on constate que le retour des ions vers la couche superficielle est relativement limité. C'est le cas notamment pour les ions calcium. Par ailleurs, les différents essais effectués sur ce type de traitement semblent montrer que les ions alcalins voient leur diffusion se limiter à la zone s'étendant jusqu'au front des alcalino-terreux. Ces deux caractéristiques combinées font que, même après recuit, on conserve une couche bien désionisée essentiellement formée de silice.

Dans le cas du traitement effectué avec électrodes sur le même côté de la feuille, tel que schématisé à la figure 7, des essais ont été conduits dans les conditions suivantes :

| - température du verre | 540°C, |
|---|---|
| - distance entre électrodes | 46 mm, |
| - débit d'argon | 2 l/min, |
| - vitesse de défilement | 1 m/min, |
| - intensité | 23 mA/cm, |
| - tension | environ 930 V. |

Dans ces conditions, les études par SIMS montrent une désionisation pratiquement complète sur une profondeur d'environ 0,1 micromètre. Ce résultat se distingue de celui obtenu en opérant avec les électrodes de part et d'autre en ce que, sur le tracé des courbes du type représenté aux figures 5a et 5b, les "fronts" des alcalins et surtout du sodium se trouvent pratiquement confondus avec celui des alcalino-terreux. Quelle qu'en soit la raison, ce résultat montre que la désionisation obtenue est satisfaisante.

La couche désionisée a été étudiée aussi pour sa résistance vis-à-vis d'électrolytes. L'essai est réalisé dans une cellule dont les parois sont constituées par les faces de l'échantillon. La cellule est remplie d'eau (à forte résistivité). Dans l'eau plongent deux électrodes de platine. L'ensemble est thermostaté et l'on suit l'évolution de la conductivité dans le temps, c'est-à-dire le passage éventuel dans l'eau d'ions provenant des faces de l'échantillon.

Pour des échantillons témoins, on observe très rapidement (quelques heures) une rapide croissance de la conductivité. Au contraire dans le cas des verres traités selon l'invention, la conductivité demeure inchangée plus de 40 jours après le début de l'essai, moment où celui-ci a été interrompu.

La désionisation des verres dans la technique selon l'invention conduit à des propriétés optiques intéressantes. On constate en effet une amélioration du facteur énergétique de transmission (FET), de la transmission lumineuse (TL) et du facteur solaire (FS). Inversement, les verres traités ont un facteur énergétique de réflexion (FER) et une réflexion lumineuse (RL) moindres.

Les propriétés optiques de tous les échantillons préparés sont mesurées. A titre indicatif, on a reporté dans le tableau ci-dessous les valeurs mesurées dans le cas des échantillons correspondant aux figures 5a-b et 6 (pour les deux états, avant et après recuit). Les résultats sont comparés à ceux obtenus avec un échantillon témoin T non traité. La valeur 100% pour la transmission est celle qui correspond à une lame d'air.

| | FET | d FET | TL | d TL | FER | d FER | RL | d RL | FS | d FS |
|---|---|---|---|---|---|---|---|---|---|---|
| T | 87,9 | | 90,8 | | 7,8 | | 8,0 | | 89,0 | |
| 5a-b | 88,3 | + 0,4 | 91,7 | + 0,9 | 6,8 | - 0,1 | 6,5 | - 1,5 | 89,6 | + 0,6 |
| 6 | 89,0 | + 1,1 | 92,5 | + 1,7 | 6,3 | - 1,5 | 5,9 | - 2,1 | 90,2 | + 1,2 |
| 6 + recuit | 88,7 | + 0,8 | 91,7 | + 1,1 | 6,7 | - 1,1 | 6,6 | - 1,8 | 89,9 | + 0,9 |

De façon générale, les résultats font apparaitre des modifications optiques dans les conditions de l'invention qui sont de l'ordre de :

d FET : + 1% ; d TL : + 1,5% ; d FS : + 1%.

Ces modifications sont très appréciables pour tous les verres dans lesquels les propriétés de transmission sont l'élément déterminant notamment dans le domaine des verres utilisés pour la fabrication d'éléments photovoltaïques.

On remarque en plus que, même le très sévère essai de recuit laisse subsister pour une large part les améliorations obtenues par le traitement selon l'invention.

Les différences constatées pour ce qui concerne les propriétés optiques, notamment de transmission, entre les échantillons correspondant aux figures 5 et 6 montrent que ces propriétés ne varient pas de façon uniforme en fonction de l'épaisseur de la couche désionisée. L'étude théorique du phénomène montre en effet que, pour une longueur d'onde donnée, l'absorption lumineuse de l'ensemble optique formé par deux couches superposées d'indices différents passe par une série de maxima et minima quand la couche superficielle voit son épaisseur croitre. Le facteur de transmission qui est établi pour toute une gamme de longueur d'onde, minimise cette influence périodique de l'épaisseur de la couche superficielle, mais ne l'élimine pas complètement. C'est ce qui explique que l'on puisse avoir un meilleur gain de transmission dans le cas de la figure 6, alors que le front dépourvu de calcium est un peu moins "profond" que celui de l'échantillon de la figure 5.

Il est encore possible, selon l'invention, de traiter successivement les deux faces de la feuille de verre afin d'obtenir sur chacune une couche désionisée. Ceci peut être obtenu en faisant passer successivement la feuille entre des couples d'électrodes ou de séries de couples, de polarités inversées. Pour éviter de faire rediffuser en sens inverse les éléments éliminés au cours du premier traitement et qui peuvent former des carbonates à la surface de la feuille, il est possible de prévoir un "nettoyage" de cette surface entre les deux désionisations.

Le nettoyage en question peut prendre, par exemple, la forme d'un traitement par un gaz réactif. Ce mode est avantageux en ce qu'il permet le nettoyage à chaud. Les deux désionisations peuvent ainsi se succéder directement sans refroidissement et réchauffement intermédiaires entre ces deux opérations de désionisation.

Il est bien entendu également possible de procéder à un lavage au moyen d'un liquide, notamment d'eau. Un tel lavage implique alors un refroidissement suivi d'un réchauffement complet entre les désionisations successives des deux faces de la feuille traitée.

Si un lavage peut être envisagé lorsque les électrodes sont situées de part et d'autre de la feuille, nous avons vu précédemment que ceci pouvait être évité en ayant recours à un montage du type représenté à la figure 8.

Le traitement des deux faces des feuilles est avantageux pour conférer à celles-ci, outre les propriétés optiques dont il a été quesion précédemment, les propriétés de résistance chimique propres aux

L'expérience montre aussi que le traitement sur les deux faces de la feuille permet d'améliorer encore les gains en facteur énergétique de transmission ; transmission lumineuse et facteur solaire et, corrélativement, à diminuer le facteur énergétique de réflexion et la réflexion lumineuse.

Il convient de préciser, en relation avec ce qui est indiqué précédemment de l'existence de minima et maxima des propriétés en fonction de la profondeur du traitement, que les gains obtenus par le traitement des deux faces tiennent compte de ces variations. Autrement dit, les minima et maxima qui demeurent dans le cas du traitement des deux faces se situent à des niveaux supérieurs à ceux que l'on constate après le traitement d'une seule face.

Les essais ont été conduits de la façon suivante :

L'échantillon est traité une première fois dans les conditions correspondant à l'essai dont les résultats sont illustrés à la figure 5a-b. L'échantillon est refroidi, lavé pour éliminer le sodium apparu en surface. Il est réchauffé dans des conditions indentiques à celle du traitement de la première face. Ceci correspond à un traitement suivi d'un recuit pour la première face traitée. La seconde face de l'échantillon est traitée dans les mêmes conditions que pour le premier passage.

L'échantillon ainsi traité présente les caractéristiques suivantes :

|  | FET | d FET | TL | d TL | FER | d FER | RL | d RL | FS | d FS |
|---|---|---|---|---|---|---|---|---|---|---|
| T | 87,8 |  | 90,7 |  | 7,7 |  | 8,1 |  | 89,0 |  |
| échan-tillon | 89,5 | 1,7 | 93,1 | 2,4 | 6,1 | 1,6 | 5,5 | 2,6 | 90,6 | 1,6 |

**Revendications**

1. Procédé de désionisation superficielle d'une feuille, éventuellement continue, en verre sodo-calcique dans lequel le verre est porté à température élevée, inférieure à la température de ramollissement, et soumis à un balayage à vitesse constante d'une décharge couronne établie au moyen d'un courant continu régulé en intensité en maintenant une tension qui est limitée à celle qui risquerait la formation d'arcs électriques et dans lequel l'atmosphère avoisinant l'électrode dans laquelle se développe la décharge couronne est constituée au moins, en partie, d'un gaz plasmagène.

2. Procédé selon la revendication 1 dans lequel la feuille en verre est mobile par rapport à des électrodes linéaires s'étendant parallèlement à la surface à traiter, l'intensité de la décharge étant comprise entre 1 et 400 mA/cm d'électrode.

3. Procédé selon la revendication 2 dans lequel l'intensité est comprise entre 20 et 400 mA/cm.

4. Procédé selon l'une des revendications précédentes dans lequel le verre traité est porté à une température comprise entre 100 et 250°C.

5. Procédé selon l'une des revendications 1 à 3 dans lequel le verre est porté à une température comprise entre 450 et 750°C.

6. Procédé selon la revendication 1 dans lequel le gaz plasmagène est l'argon.

7. Procédé selon l'une des revendications précédentes dans lequel l'atmosphère dans laquelle s'effectue la décharge est à pression réduite.

8. Procédé selon l'une des revendications précédentes dans lequel chacune des électrodes est séparée de la surface du verre, d'une distance jusqu'à 8 mm.

9. Procédé selon l'une des revendications précédentes dans lequel le balayage de la surface à traiter est effectué à une vitesse comprise entre 0,5 et 25 m/min.

10. Dispositif pour le traitement de désionisation selon l'une des revendications précédentes comprenant un ensemble de deux électrodes linéaires disposées de part et d'autre du verre à traiter, ces électrodes étant reliées à un générateur régulé en intensité et comprenant des moyens faisant passer, à une vitesse constante entre les électrodes, le verre à la température souhaitée.

11. Dispositif selon la revendication 10 dans lequel les électrodes (4, 5) sont creuses, un gaz plasmagène circulant dans ces électrodes et celles-ci présentant vis-à-vis du verre à traiter une fente continue (6, 7) par laquelle le gaz plasmagène s'échappe.

11

## Claims

1. Method of surface deionisation of a sheet, possibly continuous sheet, of sodo-calcic glass, in which the glass is raised to a high temperature, lower than the softening temperature, and is subjected to sweeping at constant speed with a corona discharge established by means of a direct current controlled in intensity by maintaining a voltage which is limited to that which would lead to risk of the formation of electric arcs, and in which the atmosphere adjacent to the electrode in which the corona discharge develops is constituted, at least partly, of a plasma-producing gas.

2. Method according to Claim 1, in which the glass sheet is movable relative to linear electrodes extending parallel to the surface to be treated, the intensity of the discharge being from 1 to 400 mA/cm of electrode.

3. Method according to Claim 2, in which the intensity is from 20 to 400 mA/cm.

4. Method according to one of the preceding Claims, in which the glass treated is raised to a temperature of between 100 and 250°C.

5. Method according to one of Claims 1 to 3, in which the glass is raised to a temperature of from 450 to 750°C.

6. Method according to Claim 1, in which the plasma-producing gas is argon.

7. Method according to one of the preceding Claims, in which the atmosphere in which the discharge is carried out is at reduced pressure.

8. Method according to one of the preceding Claims, in which each of the electrodes is separated from the surface of the glass by a distance of up to 8 mm.

9. Method according to one of the preceding Claims, in which the sweeping of the surface to be treated is carried out at a speed of from 0.5 to 25 m/min.

10. Device for the deionisation treatment according to one of the preceding Claims, comprising an assembly of two linear electrodes disposed on either side of the glass to be treated, these electrodes being connected to a controlled-output generator, and comprising means for causing the glass at the desired temperature to pass at a constant speed between the electrodes.

11. Device according to Claim 10, in which the electrodes (4, 5) are hollow, a plasma-producing gas flowing through these electrodes and the electrodes having a continuous slit (6,7) opposite the glass to be treated, through which the plasma-producing gas escapes.

## Patentansprüche

1. Verfahren zur gegebenenfalls kontinuierlichen, oberflächlichen Deionisation einer Scheibe aus Natriumcalciumglas, bei dem das Glas auf eine erhöhte Temperatur unterhalb der Erweichungstemperatur gebracht und einer Abtastung bei konstanter Geschwindigkeit mit einer Coronaentladung, die mit Hilfe eines in der Intensität regulierten, kontinierlichen Stroms unter Aufrechterhaltung einer Spannung, die nicht die Bildung von elektrischen Lichtbögen riskiert, unterworfen wird und worin die Atmosphäre in Nachbarschaft zur Elektrode, an der sich die Coronaentladung entwickelt, zumindest teilweise aus einem plasmagenen Gas gebildet wird.

2. Verfahren nach Anspruch 1, worin die Glasscheibe in bezug auf sich parallel zur zu behandelnden Oberfläche erstreckenden linearen Elektroden beweglich ist und sich die Intensität der Entladung zwischen 1 und 400 mA/cm Elektrode bewegt.

3. Verfahren nach Anspruch 2, worin sich die Intensität zwischen 20 und 400 mA/cm bewegt.

12

4. Verfahren nach einem der vorstehenden Ansprüche, worin das behandelte Glas auf eine Temperatur zwischen 100 und 250° C gebracht wird.

5. Verfahren nach einem der Ansprüche 1 bis 3, worin das Glas auf eine Temperatur zwischen 450 und 750° C gebracht wird.

6. Verfahren nach Anspruch 1, worin das plasmagene Glas Argon ist.

7. Verfahren nach einem der vorstehenden Ansprüche, worin die Atmosphäre, in der die Entladung stattfindet, unter vermindertem Druck steht.

8. Verfahren nach einem der vorstehenden Ansprüche, worin jede der Elektroden von der Oberfläche des Glases durch einen Abstand von bis zu 8 mm getrennt ist.

9. Verfahren nach einem der vorstehenden Ansprüche, worin die Abtastung der zu behandelnden Oberfläche mit einer Geschwindigkeit von 0,5 bis 25 m/min erfolgt.

10. Vorrichtung zur Deionisationsbehandlung nach einem der vorstehenden Ansprüche mit einem Aufbau aus zwei linearen Elektroden, welche zu beiden Seiten des zu behandelnden Glases angeordnet sind, wobei die Elektroden mit einem intensitätsgeregelten Generator verbunden sind, sowie Einrichtungen, die das Glas mit der gewünschten Temperatur und konstanter Geschwindigkeit zwischen den Elektroden hindurchführen.

11. Vorrichtung nach Anspruch 10, worin die Elektroden (4, 5) hohl sind, ein plasmagenes Gas in den Elektroden zirkuliert und diese gegenüber dem zu behandelnden Glas einen kontinuierlichen Spalt (6, 7) aufweisen, durch den das plasmagene Gas ausströmt.

FIG.1

FIG.2

FIG.3

FIG.7

FIG.8

FIG.4a

Na
Ca
Si
Mg
K
Al

0,10   0,20   0,30   0,40   0,50

$x10^{-6}$m

FIG.4b

Na
Ca
Si
Mg
K
Al

0,10   0,20   0,30   0,40

$x10^{-6}$m

FIG.4c

Si
Ca
Mg
Al
Na

0,2   0,4   0,6   0,8   1,0   1,2   $x10^{-6}$m

FIG.5a

FIG.5b

FIG.6